# EUROPÄISCHE PATENTSCHRIFT

(11) **EP 3 520 162 B1**
(45) Veröffentlichungstag und Bekanntmachung des Hinweises auf die Patenterteilung: **21.02.2024**
(21) Anmeldenummer: 17807756.6
(22) Anmeldetag: 15.11.2017
(51) Int. Cl.: H01M 8/04302, H01M 8/04303, H01M 8/2465, H01M 8/249

(54) **BRENNSTOFFZELLENMODUL, BRENNSTOFFZELLENSYSTEM SOWIE BETRIEBSVERFAHREN**
FUEL CELL MODULE, FUEL CELL SYSTEM AND METHOD OF OPERATION
MODULE DE PILE À COMBUSTIBLE, SYSTÈME DE PILE À COMBUSTIBLE ET PROCÉDÉ DE FONCTIONNEMENT

(30) Priorität: 18.11.2016 EP 16002468
(43) Veröffentlichungstag der Anmeldung: 07.08.2019
(73) Patentinhaber: Siemens Energy Global GmbH & Co. KG, 81739 München (DE)
(72) Erfinder: BEIE, Hans-Jürgen, 90419 Nürnberg (DE); BRANDT, Torsten, 91301 Forchheim (DE); BÄRNREUTHER, Frank, 91413 Neustadt Aisch (DE); HOFFMANN, Joachim, 90559 Burgthann (DE); MATTEJAT, Arno, 91056 Erlangen (DE); VOITLEIN, Ottmar, 91475 Lonnerstadt (DE)
(86) Internationale Anmeldenummer: PCT/EP2017/079306
(87) Internationale Veröffentlichungsnummer: WO 2018/091522

(56) Entgegenhaltungen:
- DE-A1-102004 003 670
- DE-A1-102004 059 776
- DE-A1-102010 028 961
- KR-B1- 101 403 173
- US-A1- 2005 129 999

## Beschreibung

Die Erfindung betrifft ein Brennstoffzellenmodul umfassend eine Brennstoffzelleneinheit und eine Betriebsmittel-Versorgungseinheit zur Versorgung der Brennstoffzelleneinheit mit Betriebsmitteln gemäß Oberbegriff des Patentanspruchs 1. Ein derartiges Brennstoffzellenmodul ist beispielsweise aus der WO 03/030291 A2 bekannt.

Die Erfindung betrifft ferner ein Brennstoffzellensystem mit mehreren derartigen Brennstoffzellenmodulen gemäß Patentanspruch 10 sowie ein Betriebsverfahren gemäß Patentanspruch 11 und 13.

Modular aufgebaute Brennstoffzellensysteme kommen bereits in verschiedensten Anwendungen zum Einsatz. Ein sehr vorteilhafter Anwendungsfall liegt in der umweltfreundlichen und geräuschlosen elektrischen Energieerzeugung in maritimen Anwendungen, so beispielsweise an Bord von Schiffen, insbesondere Unterseebooten, oder unbemannten Unterwasserfahrzeugen.

Dabei kommen Brennstoffzellenmodule zum Einsatz, die üblicherweise eine elektrische Nennleistung von mindestens 5 kW aufweisen.

Derartige Brennstoffzellenmodule sind beispielsweise aus der WO 03/030291 A2, der WO 2005/073075 A1 sowie aus dem Prospekt der Siemens AG, Titel: "PEM Fuel Cells for Submarines", E10001-A930-A35-V3-7600, Siemens AG 2001, Deckblatt bekannt.

Brennstoffzellen bzw. Brennstoffzellenmodule sind ferner bekannt aus der US 2005/129999 A1, die das Problem der ungleichmäßigen Verteilung von Brennstoff auf die verschiedenen Brennstoffzellen beim Anfahren behandelt, oder aus der DE 10 2010 028961 A1, welche ein modulares Brennstoffzellensystem offenbart, wobei ein zentrales Medien-Kanalsystem zumindest teilweise innerhalb einer Tragstruktur angeordnet ist und wobei die Brennstoffzellen-Einheiten jeweils mittels zumindest eines Verbindungskanals an das zentrale Kanalsystem angeschlossen sind. Eine weitere Brennstoffzellenanordnung mit mehreren mittels eines Verteilermoduls zusammengeschalteten Brennstoffzellenmodulen ist in der DE 10 2004 003670 A1 offenbart.

Die Brennstoffzellenmodule sind zur Versorgung mit Betriebsmitteln (z.B. Wasserstoff, Sauerstoff, Kühlwasser, Stickstoff) an eine gemeinsame Betriebsmittelversorgung angeschlossen (z.B. an jeweils einen gemeinsamen Speicher für Sauerstoff, Wasserstoff und Stickstoff). Üblicherweise sind die Brennstoffzellenmodule zur Erzielung eines gewünschten Ausgangsspannungsniveaus auch elektrisch in Reihe geschaltet. Alternativ können sie auch einzeln an einen DC/DC-Steller geschaltet sein.

Das Brennstoffzellenmodul weist eine Brennstoffzelleneinheit und eine Betriebsmittel-Versorgungseinheit zur Versorgung der Brennstoffzelleneinheit mit den Betriebsmitteln auf, wobei die Brennstoffzelleneinheit und die Betriebsmittel-Versorgungseinheit über eine zwischen den beiden Einheiten angeordnete Verbindungs-Platte miteinander verbunden sind.

Die Brennstoffzelleneinheit weist zusätzlich eine Endplatte auf, wobei zwischen der Verbindungs-Platte und der Endplatte zumindest ein Stapel von Brennstoffzellen sowie ein Stapel an Befeuchtungszellen angeordnet sind. Die Endplatte und die Verbindungsplatte sind mittels Zugankern miteinander verspannt und halten somit die Stapel zusammen. Vorzugsweise wird ein kaskadierter Brennstoffzellenstapel (d.h. mehrere medienseitig kaskadenartig hintereinandergeschaltete Teilstapel) für einen möglichst abgasfreien Betrieb des Brennstoffzellenmoduls verwendet.

Die Betriebsmittel-Versorgungseinheit ist ebenfalls mit der Verbindungs-Platte verbunden und weist eine Anschlussplatte mit Stromanschlüssen zum Abgreifen eines in den Brennstoffzellen erzeugten Stromes von außerhalb des Brennstoffzellenmoduls sowie Betriebsmittelanschlüsse zur Zu- und Abfuhr von Betriebsmitteln zu bzw. von dem Brennstoffzellenmodul auf.

Die Betriebsmittel-Versorgungseinheit umfasst Hilfskomponenten für den Betrieb des Brennstoffzellenmoduls, insbesondere Ventile zum Zuschalten und Wegschalten der (externen) Betriebsmittelversorgung, Drucksensoren, Temperatursensoren und/oder Wasserabscheider. Sensoren und Aktoren des Brennstoffzellenmoduls sind über entsprechende Signal- und Steuerleitungen mit einer entfernten Steuerungs- und Regelungseinrichtung verbunden.

Es ist dabei eine hohe Verfügbarkeit des Brennstoffzellensystems und somit auch der einzelnen Module sicherzustellen. Im Falle eines Defektes einer Brennstoffzelle wird bei den vorstehend beschriebenen Brennstoffzellenmodulen üblicherweise das gesamte Modul aus dem Brennstoffzellensystem ausgebaut und falls notwendig gegen ein intaktes Modul ausgetauscht. Hierzu wird - gesteuert durch eine übergeordnete Steuerungs- und Regelungseinrichtung - das gesamte Brennstoffzellensystem, d.h. alle Brennstoffzellenmodule, mit einer Abschaltprozedur in einen sicheren Zustand gebracht. Nach Austausch des defekten Moduls wird das gesamte Brennstoffzellensystem mit einer Einschaltprozedur wieder in Betrieb genommen.

Es ist Aufgabe vorliegender Erfindung, die Verfügbarkeit des Brennstoffzellensystems bzw. der Brennstoffzellenmodule noch weiter zu erhöhen.

Die Lösung dieser Aufgabe gelingt durch ein Brennstoffzellenmodul gemäß Patentanspruch 1, ein Brennstoffzellensystem mit mehreren derartigen Brennstoffzellenmodulen gemäß Patentanspruch 10 sowie ein Betriebsverfahren für ein Brennstoffzellensystem gemäß Patentanspruch 11 und 13. Vorteilhafte Ausgestaltungen sind Gegenstand der jeweiligen Unteransprüche.

Ein Brennstoffzellenmodul gemäß der Erfindung umfasst eine Brennstoffzelleneinheit und eine Betriebsmittel-Versorgungseinheit zur Versorgung der Brennstoffzelleneinheit mit Betriebsmitteln, wobei die Brennstoffzelleneinheit zumindest einen Stapel von Brennstoffzellen, vorzugsweise einen kaskadierten Stapel von Brennstoffzellen, aufweist, wobei die Betriebsmittel-Versorgungseinheit Stromanschlüsse zum Abgreifen eines in den Brennstoffzellen erzeugten Stromes von außerhalb des Brennstoffzellenmoduls und Betriebsmittelanschlüsse zur Zu- und Abfuhr von Betriebsmitteln zu bzw. von dem Brennstoffzellenmodul aufweist, wobei die Brennstoffzelleneinheit und die Betriebsmittel-Versorgungseinheit voneinander trennbar sind und es umfasst eine am oder im Brennstoffzellenmodul angeordnete Modulsteuerungs- und/oder -regelungseinrichtung, die ausgebildet ist, mittels einer Abschaltprozedur die Brennstoffzelleneinheit vor einem Trennen von der Betriebsmittel-Versorgungseinheit in einen sicheren Zustand zu bringen und/oder mittels einer Einschaltprozedur die Brennstoffzelleneinheit nach einem Verbinden mit der Betriebsmittel-Versorgungseinheit in Betrieb zu nehmen.

Unter einem "sicheren" Zustand wird hierbei ein Zustand verstanden, bei dem zum einen an der Brennstoffzelleneinheit keine gefährliche Berührungsspannungen (z.B. Spannungen kleiner 120 V DC) anliegen und zum anderen bei dem Betriebsmittelkonzentrationen einen vorgegebenen Grenzwert unterschreiten (z.B. Wasserstoffkonzentration kleiner als 4 Vol.%), so dass ein Trennen der Brennstoffzelleneinheit von der Betriebsmittel-Versorgungseinheit und somit ein Kontakt der Brennstoffzellen zur Umgebungsluft dann nicht zur Ausbildung eines explosionsfähigen Brennstoff/Sauerstoff-Gemisches führt.

Unter "in Betrieb nehmen" wird hierbei verstanden, dass durch eine Betriebsmittelzufuhr zu der Brennstoffzelleneinheit eine kontrollierte elektrochemische Reaktion in den Brennstoffzellen in Gang gesetzt und eine Ausgangsspannung an der Brennstoffzelleneinheit erzeugt wird.

Im Fall eines Defektes einer Brennstoffzelle kann somit die Brennstoffzelleneinheit gefahrlos von der Betriebsmittel-Versorgungseinheit entfernt und ausgetauscht werden. Die Betriebsmittel-Versorgungseinheit kann während des Austausches dagegen in einem Brennstoffzellensystem eingebaut verbleiben. Insbesondere müssen die Anschlüsse der Betriebsmittel-Versorgungseinheit an die Betriebsmittelversorgung des Brennstoffzellensystems sowie die Stromanschlüsse nicht getrennt werden. Das Brennstoffzellensystem muss deshalb für einen Austausch der Brennstoffzelleneinheit nicht abgeschaltet und neu gestartet werden. Hierdurch kann der Zeitbedarf und der Aufwand für eine Reparatur des Brennstoffzellenmoduls bzw. des Brennstoffzellensystems verringert und somit dessen Verfügbarkeit erhöht werden.

Durch die am oder im Brennstoffzellenmodul angeordnete Modulsteuerungs- und/oder -regelungseinrichtung kann auf eine aufwendige Verkabelung zu einer übergeordneten Steuerungs- und/oder -regelungseinrichtung verzichtet werden und eine weitgehend autarke Steuerung und/oder Regelung des Brennstoffzellenmoduls unabhängig von einer übergeordneten Steuerungs- und/oder -regelungseinrichtung erfolgen.

Vorzugsweise ist die Modulsteuerungs- und/oder -regelungseinrichtung lösbar an der Brennstoffzelleneinheit oder der Betriebsmittel-Versorgungseinheit befestigt und über von der Betriebsmittel-Versorgungseinheit und/oder der Brennstoffzelleneinheit lösbare Steuer- und/oder Signalleitungen mit jeweils darin angeordneten Aktoren bzw. Sensoren verbunden. Die Modulsteuerungs- und/oder -regelungseinrichtung kann somit im Falle eines Defektes ebenfalls leicht ausgetauscht werden.

Die Abschaltprozedur umfasst von Vorteil ein Entladen und ein Inertisieren der Brennstoffzellen. Unter "Inertisieren" wird hierbei ein (ggf. mehrmaliges) Evakuieren und Auffüllen der Gasräume der Brennstoffzellen mit einem inerten Gas (vorzugsweise Stickstoff) und/oder Spülen mit einem inerten Gas verstanden, bis die Brennstoffkonzentration einen vorgegebenen Grenzwert unterschreitet.

Das Brennstoffzellenmodul kann von Vorteil einen zuschaltbaren elektrischen Widerstand zur elektrischen Entladung der Brennstoffzelleneinheit, vorzugsweise als Bestandteil der Abschaltprozedur, umfassen.

Vorzugsweise umfasst die Einschaltprozedur zumindest einen, vorzugsweise sämtliche, der folgenden Schritte:
- Prüfung eines ordnungsgemäßen Anschlusses von Sensoren und Aktoren an die Modulsteuerungs- und/oder -regelungseinrichtung,
- Prüfung eines ordnungsgemäßen Anschlusses von Stromleitern (z.B. Stromschienen) zur Führung des von der Brennstoffzelleneinheit erzeigten Stromes,
- Befüllen von Kühlmittelräumen der Brennstoffzelleneinheit (2) mit Kühlmittel,
- Befüllen von Betriebsgasräumen der Brennstoffzelleneinheit mit einem inertem Gas, vorzugsweise Stickstoff, nach, vorzugsweise mehrfachem, Evakuieren und/oder Spülen mit inertem Gas, vorzugsweise Stickstoff,
- Prüfung der Dichtigkeit (vorzugsweise sowohl modulintern und nach extern),
- Befüllen von Betriebsgasräumen der Brennstoffzelleneinheit mit Betriebsgasen (Reaktanten),
- Überprüfen der elektrochemischen Reaktion der Brennstoffzellen, vorzugsweise anhand der Leerlaufspannungen.

Ein Verfahren zum Auffüllen der Betriebsmittelräume der Brennstoffzelleneinheit mit Betriebsmitteln ist beispielsweise in der noch unveröffentlichten europäischen Patentanmeldung Nr. 16163367.2 der Anmelderin beschrieben.

Weiterhin weist das Brennstoffzellenmodul vorzugsweise ein oder mehrere Bedienelemente zum Starten der Abschaltprozedur und/oder der Einschaltprozedur und/oder ein oder mehrere Anzeigeelemente zur Anzeige eines erfolgreichen Abschlusses der Abschaltprozedur und/oder der Einschaltprozedur auf. Das Bedienelement kann beispielsweise ein Taster, ein Schalter oder ein Element eines berührungsempfindlichen Displays (Touchscreen) sein. Das Anzeigeelement kann beispielsweise ein optischer oder ein akustischer Signalgeber oder ein Element eines Displays sein. Eine Person kann somit besonders einfach vor Ort an dem Brennstoffzellenmodul die Abschaltprozedur oder Einschaltprozedur starten und erhält eine Rückmeldung, ab wann er sicher die Brennstoffzelleneinheit von der Betriebsmittel-Versorgungseinheit trennen kann bzw. ab wann das Brennstoffzellenmodul nach einem Verbinden von Brennstoffzelleneinheit und Betriebsmittel-Versorgungseinheit wieder betriebsbereit ist.

Gemäß einer konstruktiv sehr einfachen Ausgestaltung sind die Brennstoffzelleneinheit und die Betriebsmittel-Versorgungseinheit über eine zwischen den beiden Einheiten angeordnete Verbindungs-Platte miteinander verbunden, wobei die Verbindungs-Platte eine erste Teilplatte und eine zweite Teilplatte umfasst, die voneinander lösbar sind, um die Brennstoffzelleneinheit von der Betriebsmittel-Versorgungseinheit zu trennen.

Gemäß einer weiteren konstruktiv sehr einfachen Ausgestaltung ist die Brennstoffzelleneinheit mit der zweiten Teilplatte verbunden und weist eine Endplatte auf, wobei zwischen der zweiten Teilplatte und der Endplatte der zumindest eine Stapel von Brennstoffzellen angeordnet ist und wobei die zweite Teilplatte und die Endplatte derart miteinander verspannt sind, dass sie den Stapel von Brennstoffzellen zusammenhalten.

Gemäß einer weiteren konstruktiv sehr einfachen Ausgestaltung ist die Betriebsmittel-Versorgungseinheit mit der ersten Teilplatte verbunden und umfasst eine Anschlussplatte, die die Betriebsmittelanschlüsse, vorzugsweise auch die Stromanschlüsse, aufweist.

Zur Befeuchtung der Betriebsgase vor deren Zufuhr zu den Brennstoffzellen kann zwischen der zweiten Teilplatte und der Endplatte ein Stapel von Befeuchtungszellen angeordnet sein, wobei die zweite Teilplatte und die Endplatte derart miteinander verspannt sind, dass sie gleichzeitig sowohl den Stapel von Brennstoffzellen als auch den Stapel von Befeuchtungszellen zusammenhalten.

Zur einfachen Anbindung von Ver- und Entsorgungskanälen der Brennstoffzellen und ggf. der Befeuchtungszellen der Brennstoffzelleneinheit an die Betriebsmittel-Versorgungseinheit verlaufen Betriebsmittelkanäle, vorzugsweise in Stapelrichtung der Brennstoffzellen, durch die beiden Teilplatten hindurch.

Zur genauen Überwachung der Brennstoffzellen umfasst das Brennstoffzellenmodul vorzugsweise auch eine Zellspannungsüberwachungseinrichtung, die lösbar an der Brennstoffzelleneinheit befestigt ist und über von der Brennstoffzelleneinheit lösbare Signalleitungen mit Brennstoffzellen der Brennstoffzelleneinheit verbunden ist. Die Zellspannungsüberwachungseinrichtung kann somit im Falle eines Defektes ebenfalls leicht ausgetauscht werden.

Ein erfindungsgemäßes Brennstoffzellensystem umfasst mehrere vorstehend beschriebene Brennstoffzellenmodule, die zur Versorgung mit Betriebsmitteln an eine gemeinsame Betriebsmittelversorgung angeschlossen sind.

Gemäß einer vorteilhaften Ausgestaltung dieses Brennstoffzellensystems ist zum Austausch einer Brennstoffzelleneinheit eines Brennstoffzellenmoduls bei laufendem Betrieb des Brennstoffzellensystems durch Lösen der beiden Teilplatten die Brennstoffzelleneinheit dieses Brennstoffzellenmoduls von der Betriebsmittel-Versorgungseinheit trennbar, wobei aber die Betriebsmittel-Versorgungseinheit an dem Brennstoffzellensystem angeschlossen bleibt.

Bei einem erfindungsgemäßen Verfahren zum Betreiben eines Brennstoffzellensystems mit mehreren jeweils vorstehend beschriebenen Brennstoffzellenmodulen, die aus einer gemeinsamen Betriebsmittelversorgung mit Betriebsmitteln versorgt werden, wird zum Austausch einer Brennstoffzelleneinheit eines Brennstoffzellenmoduls bei laufendem Betrieb des Brennstoffzellensystems die Brennstoffzelleneinheit dieses Brennstoffzellenmoduls mittels der Abschaltprozedur in einen sicheren Zustand gebracht und anschließend von der Betriebsmittel-Versorgungseinheit getrennt, wobei nach einer Trennung der Brennstoffzelleneinheit von der Betriebsmittel-Versorgungseinheit die Betriebsmittel-Versorgungseinheit an dem Brennstoffzellensystem angeschlossen bleibt.

Bei einem weiteren erfindungsgemäßen Verfahren zum Betreiben eines Brennstoffzellensystems mit mehreren jeweils vorstehend beschriebenen Brennstoffzellenmodulen, die aus einer gemeinsamen Betriebsmittelversorgung mit Betriebsmitteln versorgt werden, wird zum Austausch einer Brennstoffzelleneinheit bei laufendem Betrieb des Brennstoffzellensystems und an das Brennstoffzellensystem angeschlossener Betriebsmittel-Versorgungseinheit die Brennstoffzelleneinheit mit der Betriebsmittel-Versorgungseinheit verbunden und mittels der Einschaltprozedur in Betrieb genommen.

Von besonderem Vorteil werden zum Austausch einer Brennstoffzelleneinheit eines Brennstoffzellenmoduls die beiden vorstehend erläuterten Verfahren nacheinander durchgeführt.

Vorzugsweise wird zum Austausch einer Brennstoffzelleneinheit eines Brennstoffzellenmoduls bei laufendem Betrieb des Brennstoffzellensystems durch Lösen der beiden vorstehend beschriebenen Teilplatten die Brennstoffzelleneinheit dieses Brennstoffzellenmoduls von der Betriebsmittel-Versorgungseinheit getrennt, wobei aber nach einer Trennung der Brennstoffzelleneinheit von der Betriebsmittel-Versorgungseinheit die Betriebsmittel-Versorgungseinheit an dem Brennstoffzellensystem angeschlossen bleibt.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Darin zeigen:
- FIG 1: ein aus dem Stand der Technik bekanntes Brennstoffzellenmodul,
- FIG 2: ein aus dem Stand der Technik bekanntes Brennstoffzellensystem,
- FIG 3: ein erfindungsgemäßes Brennstoffzellenmodul in vereinfachter schematischer Darstellung in zusammengebautem Zustand,
- FIG 4: das Brennstoffzellenmodul von FIG 3 in getrenntem Zustand,
- FIG 5: eine Draufsicht auf die Modulsteuerungs- und/oder - regelungseinrichtung des Brennstoffzellenmoduls von FIG 3 und 4,
- FIG 6: ein erfindungsgemäßes Brennstoffzellensystem,
- FIG 7: eine erste perspektivische Ansicht eines erfindungsgemäßen Brennstoffzellenmoduls in Detaildarstellung,
- FIG 8: eine zweite perspektivische Ansicht des Brennstoffzellenmoduls von FIG 7,
- FIG 9: einen Verfahrensablauf bei einer Abschaltprozedur eines Brennstoffzellenmoduls,
- FIG 10: einen Verfahrensablauf bei einer Einschaltprozedur eines Brennstoffzellenmoduls.

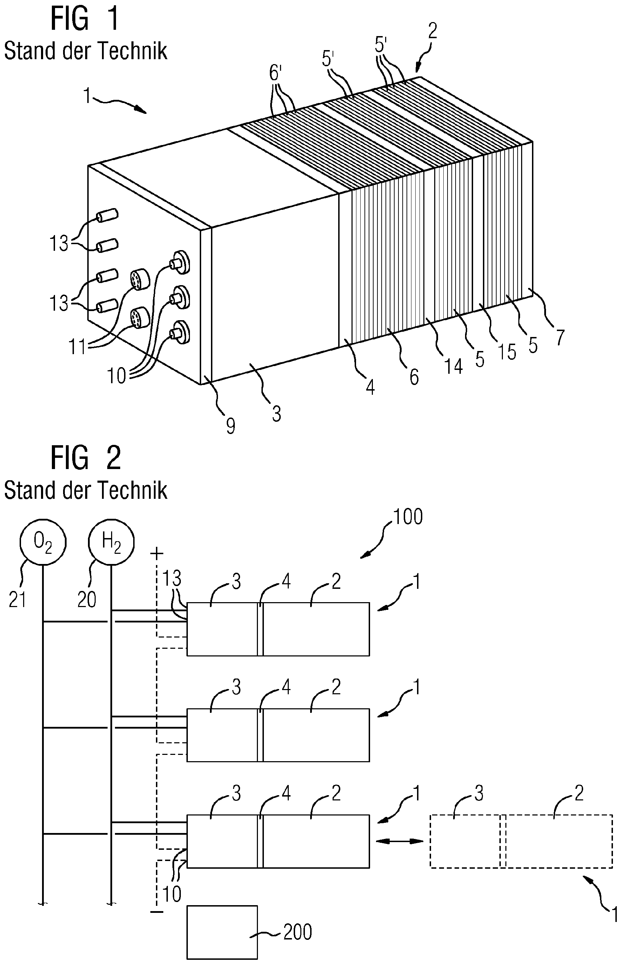

FIG 1 zeigt in vereinfachter schematischer Darstellung ein aus dem Stand der Technik bekanntes Brennstoffzellenmodul 1, das eine Brennstoffzelleneinheit 2 und eine Betriebsmittel-Versorgungseinheit 3 zur Versorgung der Brennstoffzelleneinheit 2 mit den Betriebsmitteln aufweist.

Wie dargestellt weist das Brennstoffzellenmodul 1 vorzugsweise genau eine Brennstoffzelleneinheit 2 und genau eine, nur dieser Brennstoffzelleneinheit 2 zugeordnete Betriebsmittel-Versorgungseinheit 3 auf, d.h. die Betriebsmittel-Versorgungseinheit 3 dient nur zur Versorgung dieser einen zugeordneten Brennstoffzelleneinheit 2 mit Betriebsmitteln.

Es ist aber z.B. auch möglich, dass das Brennstoffzellenmodul 1 genau eine Betriebsmittel-Versorgungseinheit 3 und zwei oder mehr nur dieser zugeordnete und von dieser mit Betriebsmitteln versorgte Brennstoffzelleneinheiten 2 aufweist.

Die Brennstoffzelleneinheit 2 umfasst einen Stapel 5 von PEM (Polymer-Elektrolyt-Membran) Brennstoffzellen 5' und einen Stapel 6 von Befeuchtungszellen 6`. Der Stapel 5 ist kaskadiert und weist hierzu zwei Teilstapel mit einer dazwischen angeordneten Stabilisierungsplatte 15 auf. Durch die Kaskadierung kann ein sehr abgasfreier Betrieb der Brennstoffzellen ermöglicht werden.

Die Brennstoffzelleneinheit 2 und die Betriebsmittel-Versorgungseinheit 3 sind über eine zwischen den beiden Einheiten angeordnete Verbindungs-Platte 4 miteinander verbunden.

Die Brennstoffzelleneinheit 2 weist zusätzlich eine Endplatte 7 auf, wobei zwischen der Verbindungs-Platte 2 und der Endplatte 7 die Stapel 5, 6 angeordnet sind. Die Endplatte 7 und die Verbindungsplatte 4 sind mittels nicht näher dargestellten Zugankern miteinander verspannt und halten somit die Stapel 5, 6 zusammen.

Die Betriebsmittel-Versorgungseinheit 3 ist ebenfalls mit der Verbindungs-Platte 4 verbunden und weist eine Anschlussplatte 9 mit Stromanschlüssen 10 zum Abgreifen eines in den Brennstoffzellen 5' erzeugten Stromes von außerhalb des Brennstoffzellenmoduls 1, Messfühleranschlüsse 11 sowie Betriebsmittelanschlüsse 13 zur Zu- und Abfuhr von Betriebsmitteln (Sauerstoff, Wasserstoff, Stickstoff) zu bzw. von dem Brennstoffzellenmodul 1 auf.

Eine weitere Zwischenplatte 14 begrenzt zusammen mit den Platten 4, 7 den Befeuchtungszellenstapel 6 bzw. den Brennstoffzellenstapel 5.

Die Platten 4, 14, 15 weisen eine Anzahl durch die Platten hindurch verlaufender in der Figur 1 nicht gezeigter Betriebsmittelkanäle auf. Die Platten 4, 7 schließen die Brennstoffzelleneinheit 2 nach außen ab.

Die Betriebsmittel-Versorgungseinheit 3 umfasst Hilfskomponenten für den Betrieb des Brennstoffzellenmoduls 1, insbesondere Ventile zum Zuschalten und Wegschalten der (externen) Betriebsmittelversorgung, Drucksensoren, Temperatursensoren und/oder Wasserabscheider.

Nicht näher gezeigte Sensoren und Aktoren des Brennstoffzellenmoduls 1 sind über entsprechende Anschlüsse in der Anschlussplatte 9 oder Endplatte 7 und Signal- und Steuerleitungen mit einer übergeordneten Steuerungs- und Regelungseinrichtung verbunden. Beispielhaft sind nur die Messfühleranschlüsse 13 dargestellt. Nicht dargestellt sind etwaige Stromschienen, die außen entlang der Brennstoffzelleneinheit 2 verlaufen und den von den Brennstoffzellen erzeugten Strom in die Betriebsmittel-Versorgungseinheit 3 führen.

FIG 2 zeigt ein Brennstoffzellensystem 100 mit mehreren Brennstoffzellenmodulen 1 gemäß FIG 1. Die Brennstoffzellenmodule 1 sind zur Betriebsmittelversorgung von außerhalb über die Anschlüsse 13 an eine gemeinsame Wasserstoffversorgung 20 und an eine gemeinsame Sauerstoffversorgung 21 angeschlossen. In ähnlicher Weise können sie beispielsweise auch an eine gemeinsame Stickstoffversorgung oder Kühlwasserversorgung angeschlossen sein. Eine übergeordnete Steuerungs- und/oder -regelungseinrichtung 200 dient zur Steuerung und/oder Regelung sämtlicher Brennstoffzellenmodule 1 und ist hierzu beispielsweise mit den Messfühlereingängen 11 (siehe FIG 1) verbunden.

Für eine Austausch einer defekten Brennstoffzelle 5` eines Brennstoffzellenmoduls 1 muss das gesamte Modul 1 mittels der Anschlüsse 10, 11, 13 von dem Brennstoffzellensystem 100 getrennt und ausgetauscht werden. Hierzu ist ein Abschalten und nachfolgendes Wiedereinschalten des gesamten Brennstoffzellensystems 100 notwendig. Auch für einen Wiedereinbau eines Brennstoffzellenmoduls 1 ist ein Abschalten und nachfolgendes Wiedereinschalten des gesamten Brennstoffzellensystems 100 notwendig.

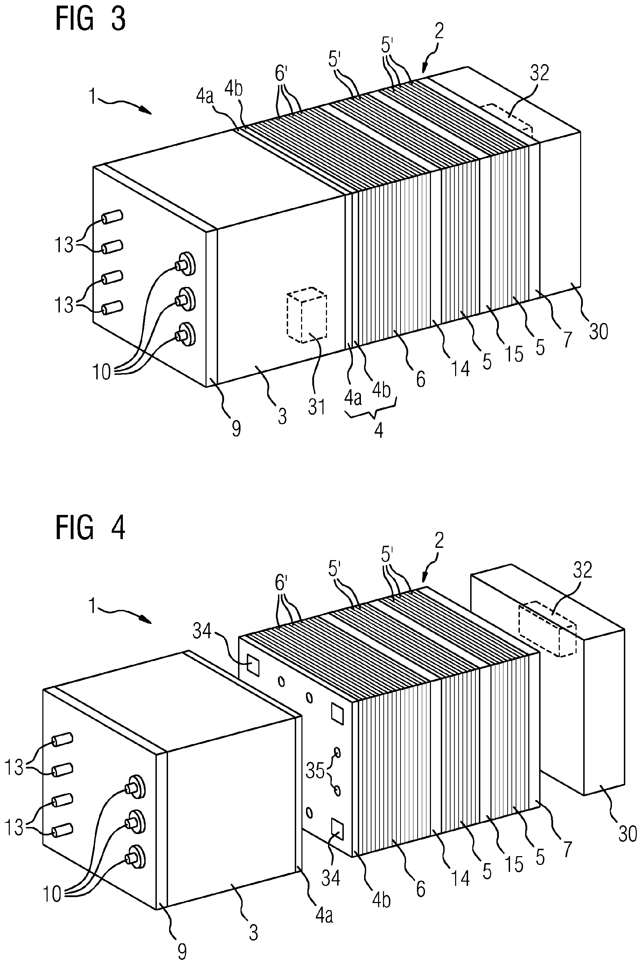

FIG 3 zeigt ein erfindungsgemäßes Brennstoffzellenmodul 1, wobei im Vergleich zu FIG 1 gleiche Komponenten mit den gleichen Bezugszeichen versehen sind. Im Unterschied zu dem Brennstoffzellenmodul 1 von FIG 1 umfasst die Verbindungs-Platte 4 eine erste Teilplatte 4a und eine zweite Teilplatte 4b, die voneinander lösbar sind, um die Brennstoffzelleneinheit 2 von der Betriebsmittel-Versorgungseinheit 3 zu trennen.

Die Brennstoffzelleneinheit 2 ist hierzu mit der zweiten Teilplatte 4b verbunden und die Stapel 5, 6 sind zwischen der zweiten Teilplatte und der Endplatte 7 angeordnet. Die zweite Teilplatte 4b und die Endplatte 7 sind derart miteinander verspannt, dass sie die Stapel 5, 6 zusammenhalten. Die Betriebsmittel-Versorgungseinheit 3 ist mit der ersten Teilplatte 4a verbunden.

Die Brennstoffzelleneinheit kann somit sehr einfach getauscht werden, wobei die Betriebsmittel-Versorgungseinheit 3 mit ihren Anschlüssen 10, 13 an dem Brennstoffzellensystem 100 angeschlossen bleiben kann.

Nicht dargestellt sind etwaige Stromschienen, die außen entlang der Brennstoffzelleneinheit 2 verlaufen und den von den Brennstoffzellen 5' erzeugten Strom in die Betriebsmittel-Versorgungseinheit 3 führen. Diese Stromschienen können beispielsweise über Steckverbindungen von Stromschienen in der Betriebsmittel-Versorgungseinheit 3 getrennt bzw. wieder mit diesen verbunden werden.

Nicht dargestellt sind auch Elemente zum lösbaren Verbinden der beiden Teilplatten 4a, 4b sowie eine Dichtung zwischen diesen beiden Teilplatten. Diese können beispielsweise aus Schraubverbindungen bestehen, die am Außenrand der Teilplatten 4a, 4b angeordnet sind. Hierzu notwendige Bohrungen können beispielsweise in einem Randbereich der Teilplatten 4a, 4b angeordnet sein, der über einen äußeren Rand der Brennstoffzellen 5' oder Befeuchtungszellen 6` übersteht.

Zur einfachen Anbindung von Ver- und Entsorgungskanälen der Brennstoffzellen 5' und der Befeuchtungszellen 6` der Brennstoffzelleneinheit 2 an die Betriebsmittel-Versorgungseinheit 3 verlaufen Betriebsmittelkanäle in nicht näher dargestellter Weise in Stapelrichtung der Zellen 5', 6', durch die beiden Teilplatten 4a, 4b hindurch.

Das Brennstoffzellenmodul 1 umfasst eine eigene Modulsteuerungs- und/oder -regelungseinrichtung 30, die lösbar an der Brennstoffzelleneinheit 2 befestigt und über nicht näher dargestellte von der Betriebsmittel-Versorgungseinheit 3 und der Brennstoffzelleneinheit 2 lösbare Steuer- und/oder Signalleitungen mit darin angeordneten Aktoren bzw. Sensoren verbunden ist. Auch die Modulsteuerungs- und/oder -regelungseinrichtung 30 kann somit im Falle eines Defektes leicht ausgetauscht werden. Die Modulsteuerungs- und/oder -regelungseinrichtung übernimmt dabei wesentliche Funktionen der übergeordneten Steuerungs- und/oder -regelungseinrichtung 200 von FIG 2, so dass auf Messfühlerausgänge in der Anschlussplatte 9 verzichtet werden kann.

Die Modulsteuerungs- und/oder -regelungseinrichtung 30 ist ausgebildet, mittels einer Abschaltprozedur die Brennstoffzelleneinheit 2 vor einem Trennen von der Betriebsmittel-Versorgungseinheit 3 in einen sicheren Zustand zu bringen und mittels einer Einschaltprozedur die Brennstoffzelleneinheit 2 nach einem Verbinden mit der Betriebsmittel-Versorgungseinheit 3 wieder in Betrieb zu nehmen.

Das Brennstoffzellenmodul 1 umfasst zur elektrischen Entladung der Brennstoffzelleneinheit 2 als Bestandteil der Abschaltprozedur einen zuschaltbaren elektrischen Widerstand 31.

Zur genauen Überwachung der Brennstoffzellen 5' umfasst das Brennstoffzellenmodul 1 weiterhin eine Zellspannungsüberwachungseinrichtung 32, die ebenfalls lösbar an der Brennstoffzelleneinheit 2 befestigt ist und über von der Brennstoffzelleneinheit 2 lösbare Signalleitungen mit Brennstoffzellen 5 der Brennstoffzelleneinheit 2 verbunden ist. Die Zellspannungsüberwachungseinrichtung 32 kann somit im Falle eines Defektes ebenfalls leicht ausgetauscht werden.

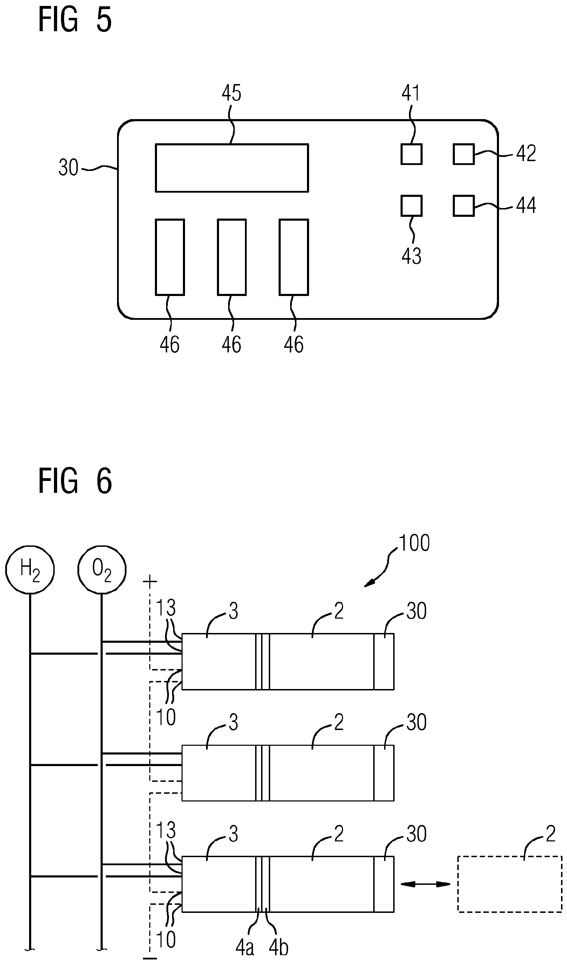

Wie in einer Draufsicht auf die Modulsteuerungs- und/oder - regelungseinrichtung 30 in FIG 5 gezeigt ist, weist diese an ihrer Außenseite ein erstes Bedienelement 41 (z.B. einen Taster) zum Starten der Abschaltprozedur und ein zweites Bedienelement 42 (z.B. einen Taster) zum Starten der Einschaltprozedur auf. Zusätzlich weist sie ein erstes Anzeigeelement 43 (z.B. eine Signallampe) zur Anzeige eines erfolgreichen Abschlusses der Abschaltprozedur und ein zweites Anzeigeelement 44 (z.B eine Signallampe) zur Anzeige eines erfolgreichen Abschlusses der Einschaltprozedur auf.

Eine Person kann somit besonders einfach vor Ort an dem Brennstoffzellenmodul 1 die Abschaltprozedur oder Einschaltprozedur starten und erhält eine Rückmeldung, ab wann sie sicher die Brennstoffzelleneinheit 2 von der Betriebsmittel-Versorgungseinheit 3 trennen kann bzw. dass das Brennstoffzellenmodul 1 nach einem Verbinden von Brennstoffzelleneinheit 2 und Betriebsmittel-Versorgungseinheit 3 wieder betriebsbereit ist.

Das Brennstoffzellenmodul 1 hat für maritime Anwendungen üblicherweise eine elektrische Nennleistung von mindestens 5 kW.

Anstatt eines kaskadierten Stapels 5 kann auch ein unkaskadierter Stapel vorhanden sein.

FIG 4 zeigt das Brennstoffzellenmodul 1 von FIG 3 in einem Zustand, in dem die Betriebsmittel-Versorgungseinheit 3, die Brennstoffzelleneinheit 2, die Modulsteuerungs- und/oder - regelungseinrichtung 30 und die Zellspannungsüberwachungseinrichtung 32 voneinander getrennt sind. Zu sehen sind auch durch die Teilplatten 4a, 4b, verlaufende Betriebsmittelkanäle 34. Zwischen den Teilplatten 4a, 4b können sich zur Abdichtung der Betriebsmittelkanäle 34 nicht näher dargestellte Dichtungen befinden. Weiterhin sind schematisch Zuganker 35 zur Verspannung der Teilplatte 4b mit der Endplatte 7 dargestellt.

FIG 5 zeigt eine Draufsicht auf die Außenseite der Modulsteuerungs- und/oder -regelungseinrichtung 30 mit den Bedienelementen 41, 42 und den Anzeigeelementen 43, 44. Zu sehen sind ferner ein Touchscreen 45 zur Anzeige von Statusinformationen sowie Steckverbinderanschlüsse 46 zum Anschluss von Steckverbindern für Signal- und Steuerleitungen sowie für eine Buskommunikation zu einer übergeordneten Steuerungs- und/oder Regelungseinrichtung.

Wie anhand eines Brennstoffzellensystems 100 in FIG 6 dargestellt, kann somit bei einem Defekt einer Brennstoffzelle 5' die Brennstoffzelleneinheit 2 von der Betriebsmittel-Versorgungseinheit 3 getrennt und ausgetauscht werden, wobei die Betriebsmittel-Versorgungseinheit 3 weiterhin an das Brennstoffzellensystems 100 angeschlossen bleibt. Dies kann bei laufendem Betrieb des Brennstoffzellensystems 100 erfolgen. Ein Abschalten und nachfolgendes Neueinschalten des gesamten Brennstoffzellensystems 100 bei einem Austausch einer einzelnen Brennstoffzelleneinheit 2 ist nicht notwendig.

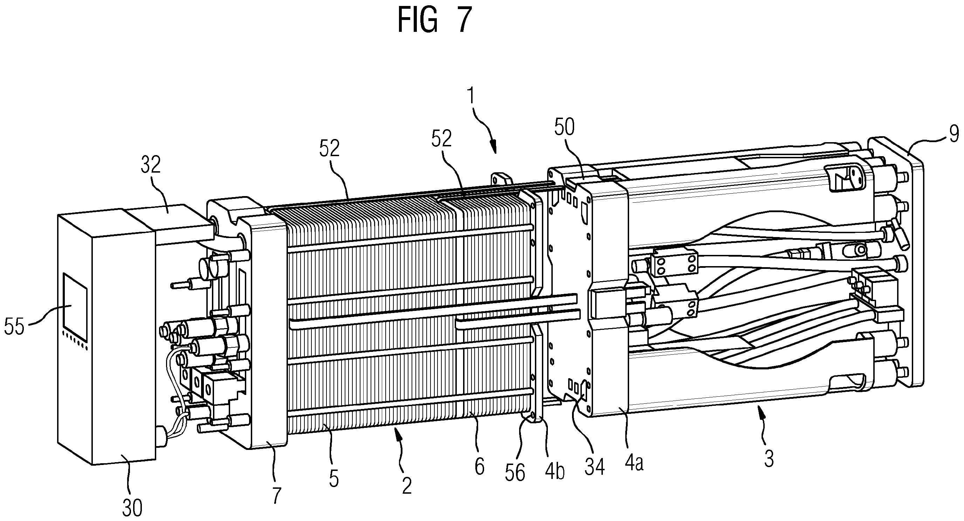

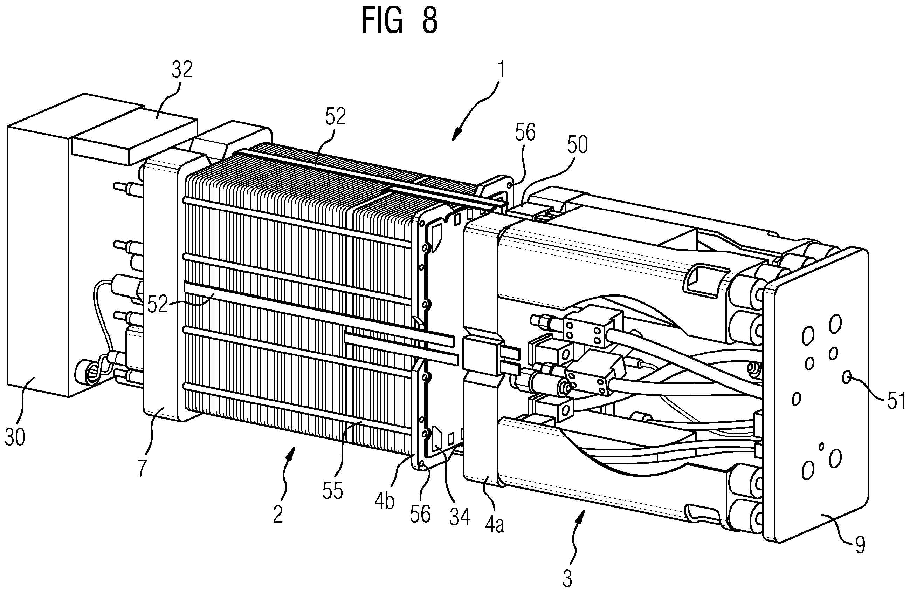

FIG 7 und 8 zeigen in zwei unterschiedlichen perspektivischen Ansichten ein erfindungsgemäßes Brennstoffzellenmodul 1 im getrennten Zustand in Detaildarstellung. Dabei sind im Vergleich zu dem Brennstoffzellenmodul 1 von FIG 3 bis FIG 5 einander entsprechende Komponenten mit gleichen Bezugszeichen versehen. Zur Vereinfachung der Darstellung sind von den Anschlüssen in der Anschlussplatte 9 nur Bohrungen 51 gezeigt.

Zu sehen sind zusätzlich entlang der Brennstoffzelleneinheit 2 verlaufende Stromschienen 52, die über Steckkupplungen 50 mit elektrischen Verbindungsleitungen in der Betriebsmittel-Versorgungseinheit 3 verbindbar bzw. von diesen lösbar sind. Die Modulsteuerungs- und/oder -regelungseinrichtung 30 weist anstatt separater Bedien- und Anzeigeelemente nun einen Touchscreen 55 auf. Weiterhin gezeigt sind Zuganker 55 zur Verspannung der Platten 4b und 7, um die Stapel 5 und 6 zusammenzuhalten.

Die beiden Teilplatten 4a, 4b können in den durch sie hindurch verlaufenden Betriebsmittelkanälen 34 auch Schnellkupplungen aufweisen.

Weiterhin sind am Außenrand der Teilplatten 4a, 4b angeordnete Bohrungen 56 für Schraubverbindungen zum lösbaren Verbinden der Brennstoffzelleneinheit 2 mit der Betriebsmittel-Versorgungseinheit 3 gezeigt.

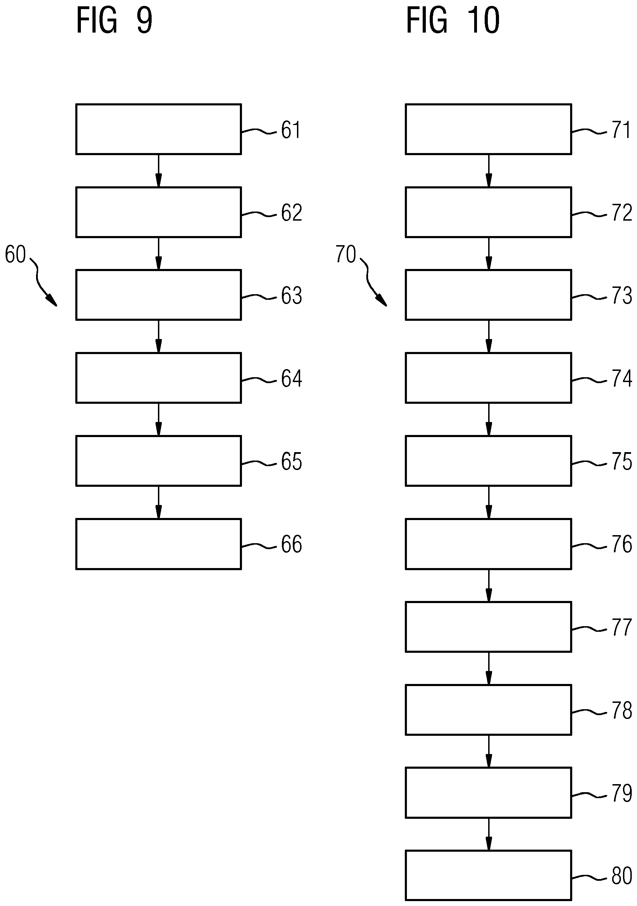

Anhand FIG 9 ist ein Verfahrensablauf 60 für eine Trennung einer Brennstoffzelleneinheit 2 von einer Betriebsmittel-Versorgungseinheit 3 veranschaulicht. Der Verfahrensablauf wird anhand der Ausführungsbeispiele von FIG 3 bis 6 erläutert.

Das Verfahren startet bei laufendem Betrieb des Brennstoffzellensystems 100 in einem Schritt 61 mit einem Abschaltbefehl durch eine Bedienperson mittels des Bedienelements 41, alternativ auch direkt durch die Modulsteuerungs- und/oder - regelungseinrichtung 30 oder die übergeordnete Steuerungs- und Regelungseinrichtung 200. Dieser Abschaltbefehl wird von der Modulsteuerungs- und/oder -regelungseinrichtung 30 erfasst.

Durch die Modulsteuerungs- und/oder -regelungseinrichtung 30 wird dann automatisch eine Abschaltprozedur gestartet und durchlaufen. Hierzu trennt die Modulsteuerungs- und/oder - regelungseinrichtung 30 zuerst mittels eines Schalters in einem Schritt 62 die Brennstoffzellen 5' von den Stromanschlüssen 10 (und somit elektrisch von dem Brennstoffzellensystem 100) und schaltet den Brennstoffzellen 5' des abzuschaltenden Brennstoffzellenmoduls 1 nach einer Abschaltung der Reaktanten und Handhabung der Betriebsgasräume den Entladewiderstand 31 zu.

In einem nächsten Schritt 63 führt die Modulsteuerungs- und/oder -regelungseinrichtung 30 ein Inertisieren der Brennstoffzellen 5' durch. Dieses Inertisieren umfasst ein (ggf. mehrmaliges) Evakuieren und Auffüllen der Gasräume der Brennstoffzellen mit Stickstoff und/oder Spülen mit Stickstoff, bis die Wasserstoffkonzentration einen vorgegebenen Grenzwert unterschreitet.

Anschließend werden in einem Schritt 64 die Kühlmittelräume der Brennstoffzelleneinheit 2 entleert.

Einen erfolgreichen Abschluss der Abschlussprozedur signalisiert die Modulsteuerungs- und/oder -regelungseinrichtung 30 einer Bedienperson in einem Schritt 65 durch entsprechende Ansteuerung des Anzeigeelements 43.

Danach kann die Bedienperson in einem Schritt 66 die Modulsteuerungs- und/oder -regelungseinrichtung 30, die Brennstoffzelleneinheit 2 und die Betriebsmittel-Versorgungseinheit 3 voneinander trennen.

Anhand FIG 10 ist ein Verfahrensablauf 70 für eine Verbindung einer Brennstoffzelleneinheit 2 und einer Betriebsmittel-Versorgungseinheit 3 veranschaulicht. Der Verfahrensablauf wird ebenfalls anhand der Ausführungsbeispiele von FIG 3 bis 6 erläutert.

Das Verfahren startet bei laufendem Betrieb des Brennstoffzellensystems 100 in einem Schritt 71 mit einem mechanischen Verbinden der Brennstoffzelleneinheit 2 und der Betriebsmittel-Versorgungseinheit 3 durch eine Bedienperson. Außerdem wird die Modulsteuerungs- und/oder -regelungseinrichtung 30 elektrisch und mechanisch mit der Brennstoffzelleneinheit 2 und der Betriebsmittel-Versorgungseinheit 3 verbunden.

Anschließend erzeugt die Bedienperson in einem Schritt 72 durch Betätigen des Bedienelements 42 einen Einschaltbefehl. Dieser Einschaltbefehl wird von der Modulsteuerungs- und/oder -regelungseinrichtung 30 erfasst.

Durch die Modulsteuerungs- und/oder -regelungseinrichtung 30 wird dann automatisch eine Einschaltprozedur gestartet und durchlaufen.

Hierbei wird in einem ersten Schritt 73 der ordnungsgemäße Anschluss von Sensoren und Ventilen an die Modulsteuerungs- und/oder -regelungseinrichtung 30 geprüft.

In einem weiteren Schritt 74 wird eine ordnungsgemäße Verbindung von Stromleitern (z.B. Stromschienen) geprüft, die den von den Brennstoffzellen erzeugten Strom führen.

Dann werden in einem Schritt 75 die Kühlmittelräume der Brennstoffzelleneinheit 2 mit Kühlmittel (z.B. deionisiertem Wasser) befüllt, das dem Brennstoffzellenmodul 1 von extern (z.B. über eine Hilfseinrichtung wie in der noch unveröffentlichten europäischen Patentanmeldung Nr. 16163367.2 der Anmelderin oder direkt über eine Betriebsmittelversorgung des angeschlossenen Brennstoffzellensystems) der Betriebsmittel-Versorgungseinheit 3 zugeführt wird. Dies kann auch eine anschließende Entlüftung und/oder Entgasung der Kühlmittelräume umfassen.

Danach werden in einem Schritt 76 die Betriebsgasräume der Brennstoffzellen 5 mit Inertgas, Evakuieren und/oder Spülen geeignet vorbereitet, um in einem Schritt 77 eine Druckhalteprüfung/Dichtigkeitsprüfung bei unterschiedlichem Befüllungsgrad der Gasräume der Brennstoffzelleneinheit 2 durchzuführen (z.B. über eine Hilfseinrichtung wie in der noch unveröffentlichten europäischen Patentanmeldung Nr. 16163367.2 der Anmelderin oder direkt über eine Betriebsmittelversorgung des angeschlossenen Brennstoffzellensystems).

Anschließend können in einem Schritt 78 die Reaktanten zugeführt und die elektrochemische Reaktion, vorzugsweise anhand der Leerlaufspannungen, überprüft werden.

Hierbei werden in einem Schritt 73 die Kühlmittelräume der Einen erfolgreichen Abschluss der Einschaltprozedur signalisiert die Modulsteuerungs- und/oder -regelungseinrichtung 30 einer Bedienperson in einem Schritt 79 durch entsprechende Ansteuerung des Anzeigeelements 44.

Danach kann in einem Schritt 80 das Brennstoffzellenmodul 2 dem Brennstoffzellensystem 100 zugeschaltet werden.

## Patentansprüche

1. Brennstoffzellenmodul (1) umfassend eine Brennstoffzelleneinheit (2) und eine Betriebsmittel-Versorgungseinheit (3) zur Versorgung der Brennstoffzelleneinheit (2) mit Betriebsmitteln, wobei die Brennstoffzelleneinheit (2) zumindest einen Stapel (5) von Brennstoffzellen (5'), vorzugsweise einen kaskadierten Stapel (5) von Brennstoffzellen (5'), aufweist, wobei die Betriebsmittel-Versorgungseinheit (3) Stromanschlüsse (10) zum Abgreifen eines in den Brennstoffzellen (5') erzeugten Stromes von außerhalb des Brennstoffzellenmoduls (1) und Betriebsmittelanschlüsse (13) zur Zu- und Abfuhr von Betriebsmitteln zu bzw. von dem Brennstoffzellenmodul (2) aufweist, wobei die Brennstoffzelleneinheit (2) und die Betriebsmittel-Versorgungseinheit (3) voneinander trennbar sind, wobei das Brennstoffzellenmodul (1) eine am oder im Brennstoffzellenmodul (1) angeordnete Modulsteuerungs- und/oder -regelungseinrichtung (30) umfasst, die ausgebildet ist, mittels einer Abschaltprozedur die Brennstoffzelleneinheit (2) vor einem Trennen von der Betriebsmittel-Versorgungseinheit (3) in einen sicheren Zustand zu bringen und/oder mittels einer Einschaltprozedur die Brennstoffzelleneinheit (2) nach einem Verbinden mit der Betriebsmittel-Versorgungseinheit (3) in Betrieb zu nehmen.

2. Brennstoffzellenmodul (1) nach Anspruch 1, **dadurch gekennzeichnet, dass** die Modulsteuerungs- und/oder -regelungseinrichtung (30) lösbar an der Brennstoffzelleneinheit (2) oder der Betriebsmittel-Versorgungseinheit (3) befestigt ist und über von der Betriebsmittel-Versorgungseinheit (3) und/oder der Brennstoffzelleneinheit (2) lösbare Steuer- und/oder Signalleitungen mit jeweils darin angeordneten Aktoren bzw. Sensoren verbunden ist.

3. Brennstoffzellenmodul (1) nach einem der vorhergehenden Ansprüche, **dadurch gekennzeichnet, dass** es einen zuschaltbaren elektrischen Widerstand (31) zur elektrischen Entladung der Brennstoffzelleneinheit (2) umfasst.

4. Brennstoffzellenmodul (1) nach einem der vorhergehenden Ansprüche, **dadurch gekennzeichnet, dass** es ein oder mehrere Bedienelemente (41, 42) zum Starten der Abschaltprozedur und/oder der Einschaltprozedur und/oder ein oder mehrere Anzeigeelemente (43, 44) zur Anzeige eines erfolgreichen Abschlusses der Abschaltprozedur und/oder der Einschaltprozedur aufweist.

5. Brennstoffzellenmodul (1) nach einem der vorhergehenden Ansprüche, **dadurch gekennzeichnet, dass** die Brennstoffzelleneinheit (2) und die Betriebsmittel-Versorgungseinheit (3) über eine zwischen den beiden Einheiten angeordnete Verbindungs-Platte (4) miteinander verbunden sind, wobei die Verbindungs-Platte (4) eine erste Teilplatte (4a) und eine zweite Teilplatte (4b) umfasst, die voneinander lösbar sind, um die Brennstoffzelleneinheit (2) von der Betriebsmittel-Versorgungseinheit (3) zu trennen.

6. Brennstoffzellenmodul (1) nach Anspruch 5, **dadurch gekennzeichnet, dass** die Brennstoffzelleneinheit (2) mit der zweiten Teilplatte (4b) verbunden ist und eine Endplatte (7) aufweist, wobei zwischen der zweiten Teilplatte (4) und der Endplatte (7) der zumindest eine Stapel (5) von Brennstoffzellen (5') angeordnet ist und wobei die zweite Teilplatte (4b) und die Endplatte (7) derart miteinander verspannt sind, dass sie den Stapel (5) von Brennstoffzellen (5') zusammenhalten.

7. Brennstoffzellenmodul (1) nach einem der Ansprüche 5 oder 6, **dadurch gekennzeichnet, dass** die Betriebsmittel-Versorgungseinheit (3) mit der ersten Teilplatte (4a) verbunden ist und eine Anschlussplatte (9) umfasst, die die Betriebsmittelanschlüsse (13), vorzugsweise auch die Stromanschlüsse (10), aufweist.

8. Brennstoffzellenmodul (1) nach einem der Ansprüche 5 bis 7, **dadurch gekennzeichnet, dass** zwischen der zweiten Teilplatte (4b) und der Endplatte (7) ein Stapel (6) von Befeuchtungszellen (6') angeordnet ist, wobei die zweite Teilplatte (4b) und die Endplatte (7) derart miteinander verspannt sind, dass sie gleichzeitig sowohl den Stapel (5) von Brennstoffzellen (5') als auch den Stapel (6) von Befeuchtungszellen (6') zusammenhalten.

9. Brennstoffzellenmodul (1) nach einem der Ansprüche 5 bis 8, **dadurch gekennzeichnet, dass** Betriebsmittelkanäle (34) durch die beiden Teilplatten (4a, 4b) hindurch verlaufen.

10. Brennstoffzellensystem (100) mit mehreren Brennstoffzellenmodulen (1) jeweils nach einem der vorhergehenden Ansprüche, die zur Versorgung mit Betriebsmitteln an eine gemeinsame Betriebsmittelversorgung (20, 21) angeschlossen sind.

11. Verfahren zum Betreiben eines Brennstoffzellensystem (100) mit mehreren Brennstoffzellenmodulen (1) jeweils nach einem der Ansprüche 1 bis 9, die aus einer gemeinsamen Betriebsmittelversorgung (20, 21) mit Betriebsmitteln versorgt werden, wobei zum Austausch einer Brennstoffzelleneinheit (2) eines Brennstoffzellenmoduls (1) bei laufendem Betrieb des Brennstoffzellensystems (100) die Brennstoffzelleneinheit (2) dieses Brennstoffzellenmoduls (1) mittels der Abschaltprozedur in einen sicheren Zustand gebracht wird und anschließend von der Betriebsmittel-Versorgungseinheit (3) getrennt wird, wobei nach einer Trennung der Brennstoffzelleneinheit (2) von der Betriebsmittel-Versorgungseinheit (3) die Betriebsmittel-Versorgungseinheit (3) an das Brennstoffzellensystem (100) angeschlossen bleibt.

12. Verfahren nach Anspruch 11, **dadurch gekennzeichnet, dass** die Abschaltprozedur ein Entladen und ein Inertisieren der Brennstoffzellen (5') umfasst.

13. Verfahren zum Betreiben eines Brennstoffzellensystem (100) mit mehreren Brennstoffzellenmodulen (1) jeweils nach einem der Ansprüche 1 bis 9, die aus einer gemeinsamen Betriebsmittelversorgung (20, 21) mit Betriebsmitteln versorgt werden, wobei bei laufendem Betrieb des Brennstoffzellensystems (100) und an das Brennstoffzellensystem (100) angeschlossener Betriebsmittel-Versorgungseinheit (3) die Brennstoffzelleneinheit (2) mit der Betriebsmittel-Versorgungseinheit (3) verbunden wird und mittels der Einschaltprozedur in Betrieb genommen wird.

14. Verfahren nach Anspruch 13, **dadurch gekennzeichnet, dass** die Einschaltprozedur zumindest einen, vorzugsweise sämtliche, der folgenden Schritte umfasst:
- Prüfung eines ordnungsgemäßen Anschlusses von Sensoren und Aktoren an die Modulsteuerungs- und/oder -regelungseinrichtung (30),
- Prüfung eines ordnungsgemäßen Anschlusses von Stromleitern (52) zur Führung eines von der Brennstoffzelleneinheit (2) erzeugten Stromes,
- Befüllen von Kühlmittelräumen der Brennstoffzelleneinheit (2) mit Kühlmittel,
- Befüllen von Betriebsgasräumen der Brennstoffzelleneinheit (2) mit einem Inertgas,
- Prüfung der Dichtigkeit,
- Befüllen von Betriebsgasräumen der Brennstoffzelleneinheit (2) mit Betriebsgasen
- Überprüfen der elektrochemischen Reaktion der Brennstoffzellen (5'), vorzugsweise anhand der Leerlaufspannungen.

15. Verfahren nach einem der Ansprüche 11, bis 14, wobei zum Austausch einer Brennstoffzelleneinheit (2) eines Brennstoffzellenmoduls (1) zuerst das Verfahren nach einem der Ansprüche 11 und 12 und danach das Verfahren nach einem der Ansprüche 13 und 14 durchgeführt wird.

## Claims

1. Fuel cell module (1) comprising a fuel cell unit (2) and an operating medium supply unit (3) for supplying the fuel cell unit (2) with operating media, wherein the fuel cell unit (2) has at least one stack (5) of fuel cells (5'), preferably a cascaded stack (5) of fuel cells (5'), wherein the operating medium supply unit (3) has current connections (10) for tapping off a current generated in the fuel cells (5') from outside the fuel cell module (1), and operating medium connections (13) for supplying and discharging operating media to or from the fuel cell module (2), wherein the fuel cell unit (2) and the operating medium supply unit (3) can be separated from each other, wherein the fuel cell module (1) comprises a module control and/or regulating device (30) which is arranged on or in the fuel cell module (1) and is designed by means of a switching-off procedure to bring the fuel cell unit (2) into a safe state before separation from the operating medium supply unit (3) and/or by means of a switching-on procedure to put the fuel cell unit (2) into operation after connection to the operating medium supply unit (3).

2. Fuel cell module (1) according to Claim 1, **characterized in that** the module control and/or regulating device (30) is fastened releasably to the fuel cell unit (2) or to the operating medium supply unit (3) and is connected to actuators and/or sensors, which are in each case arranged therein, via control and/or signal lines which are releasable from the operating medium supply unit (3) and/or the fuel cell unit (2).

3. Fuel cell module (1) according to either of the preceding claims, **characterized in that** it comprises an electrical resistor (31) which can be switched on, for electrically discharging the fuel cell unit (2).

4. Fuel cell module (1) according to one of the preceding claims, **characterized in that** it has one or more operator control elements (41, 42) for starting the switching-off procedure and/or the switching-on procedure, and/or one or more display elements (43, 44) for displaying a successful conclusion of the switching-off procedure and/or the switching-on procedure.

5. Fuel cell module (1) according to one of the preceding claims, **characterized in that** the fuel cell unit (2) and the operating medium supply unit (3) are connected to each other via a connecting plate (4) arranged between the two units, wherein the connecting plate (4) comprises a first component plate (4a) and a second component plate (4b) which are releasable from each other in order to separate the fuel cell unit (2) from the operating medium supply unit (3).

6. Fuel cell module (1) according to Claim 5, **characterized in that** the fuel cell unit (2) is connected to the second component plate (4b) and has an end plate (7), wherein the at least one stack (5) of fuel cells (5') is arranged between the second component plate (4) and the end plate (7), and wherein the second component plate (4b) and the end plate (7) are clamped to each other in such a manner that they hold together the stack (5) of fuel cells (5').

7. Fuel cell module (1) according to either of Claims 5 and 6, **characterized in that** the operating medium supply unit (3) is connected to the first component plate (4a) and comprises a connection plate (9) which has the operating medium connections (13), preferably also the current connections (10) .

8. Fuel cell module (1) according to one of Claims 5 to 7, **characterized in that** a stack (6) of humidification cells (6') is arranged between the second component plate (4b) and the end plate (7), wherein the second component plate (4b) and the end plate (7) are clamped to each other in such a manner that they simultaneously hold together both the stack (5) of fuel cells (5') and also the stack (6) of humidification cells (6').

9. Fuel cell module (1) according to one of Claims 5 to 8, **characterized in** the operating medium channels (34) run through the two component plates (4a, 4b).

10. Fuel cell system (100) having a plurality of fuel cell modules (1) in each case according to one of the preceding claims, which are attached to a common operating medium supply (20, 21) for the supply of operating media.

11. Method for operating a fuel cell system (100) having a plurality of fuel cell modules (1) in each case according to one of Claims 1 to 9, which is supplied with operating media from a common operating medium supply (20, 21), wherein, in order to exchange a fuel cell unit (2) of a fuel cell module (1) while the fuel cell system (100) is in operation, the fuel cell unit (2) of said fuel cell module (1) is brought into a safe state by means of the switching-off procedure and is subsequently separated from the operating medium supply unit (3), wherein, after separation of the fuel cell unit (2) from the operating medium supply unit (3), the operating medium supply unit (3) remains attached to the fuel cell system (100).

12. Method according to Claim 11, **characterized in that** the switching-off procedure comprises discharging and inerting the fuel cells (5').

13. Method for operating a fuel cell system (100) having a plurality of fuel cell modules (1) in each case according to one of Claims 1 to 9, which is supplied with operating media from a common operating medium supply (20, 21), wherein, while the fuel cell system (100) is in operation and the operating medium supply unit (3) is attached to the fuel cell system (100), the fuel cell unit (2) is connected to the operating medium supply unit (3) and is put into operation by means of the switching-on procedure.

14. Method according to Claim 13, **characterized in that** the switching-on procedure comprises at least one, preferably all, of the following steps:
- testing a correct connection of sensors and actuators to the module control and/or regulating device (30),
- testing a correct connection of current conductors (52) for guiding a current generated by the fuel cell unit (2),
- filling coolant chambers of the fuel cell unit (2) with coolant,
- filling operating gas chambers of the fuel cell unit (2) with an inert gas,
- testing the tightness,
- filling operating gas chambers of the fuel cell unit (2) with operating gases,
- checking the electrochemical reaction of the fuel cells (5'), preferably on the basis of the no-load voltages.

15. Method according to one of Claims 11 to 14, wherein, in order to exchange a fuel cell unit (2) of a fuel cell module (1), first of all the method according to either of Claims 11 and 12 is carried out, followed by the method according to either of Claims 13 and 14.

## Revendications

1. Module (1) de pile à combustible comprenant une unité (2) de pile à combustible et une unité (3) d'alimentation en agents de fonctionnement, pour l'alimentation de l'unité (2) de pile à combustibles en agents de fonctionnement, dans lequel l'unité (2) de pile à combustible a au moins un empilement (5) de piles (5') combustible, de préférence un empilement (5) en cascade de piles (5') à combustible, dans lequel l'unité (3) d'alimentation en agents de fonctionnement a des bornes (10) de courant pour la prise d'un courant produit dans les piles (5') à combustible de l'extérieur du module (1) de pile à combustible et des raccords (13) d'agents de fonctionnement pour l'apport d'agents de fonctionnement au module (2) de pile à combustible et pour leur évacuation du module de pile à combustible, dans lequel l'unité (2) de pile à combustible et l'unité (3) d'alimentation en agents de fonctionnement peuvent être séparées l'une de l'autre, dans lequel le module (1) de pile à combustible comprend, monté sur ou dans le module (1) de pile à combustible, un dispositif (30) de commande de module et/ou de régulation de module, qui est constitué pour, au moyen d'une procédure de mise hors circuit, mettre l'unité (2) de pile à combustible, avant une séparation de l'unité (3) d'alimentation en agents de fonctionnement, dans un état sécurisé et/ou pour mettre en fonctionnement, au moyen d'une procédure de mise en circuit, l'unité (2) de pile à combustible, après une liaison avec l'unité (3) d'alimentation en agents de fonctionnement.

2. Module (1) de pile à combustible suivant la revendication 1, **caractérisé en ce que** le dispositif (30) de commande et/ou de régulation de module est fixé de manière amovible à l'unité (2) de pile à combustible ou à l'unité (3) d'alimentation en agents de fonctionnement et est relié, par des lignes de commande et/ou de signal pouvant être détachées de l'unité (3) d'alimentation en agents de fonctionnement et/ou de l'unité (2) de pile à combustible, à des actionneurs ou des capteurs, qui y sont montés respectivement.

3. Module (1) de pile à combustible suivant l'une des revendications précédentes, **caractérisé en ce qu'**il comprend une résistance (31) électrique pouvant être mise en circuit pour la décharge électrique de l'unité (2) de pile à combustible.

4. Module (1) de pile à combustible suivant l'une des revendications précédentes, **caractérisé en ce qu'**il a un ou plusieurs éléments (41, 42) de service pour faire débuter la procédure de mise hors circuit et/ou la procédure de mise en circuit et/ou un ou plusieurs éléments (43, 44) d'indication pour l'indication d'une fin couronnée de succès de la procédure de mise hors circuit et/ou de la procédure de mise en circuit.

5. Module (1) de pile à combustible suivant l'une des revendications précédentes, **caractérisé en ce que** l'unité (2) de pile à combustible et l'unité (3) d'alimentation en agents de fonctionnement sont reliées entre elles par une plaque (4) de liaison montée entre les deux unités, dans lequel la plaque (4) de liaison comprend une première plaque (4a) partielle et une deuxième plaque (4b) partielle, qui peuvent être détachées l'une de l'autre, afin de séparer l'unité (2) de pile à combustible de l'unité (3) d'alimentation en agents de fonctionnement.

6. Module (1) de pile à combustible suivant la revendication 5, **caractérisé en ce que** l'unité (2) de pile à combustible est reliée à la deuxième plaque (4b) partielle et a une plaque (7) d'extrémité, dans lequel le au moins un empilement (5) de piles (5') à combustible est disposé entre la deuxième plaque (4) partielle et la plaque (7) d'extrémité et dans lequel la deuxième plaque (4b) partielle et la plaque (7) d'extrémité sont bloquées entre elles, de manière à maintenir ensemble l'empilement (5) de pile (5') à combustible.

7. Module (1) de pile à combustible suivant l'une des revendications 5 ou 6, **caractérisé en ce que** l'unité (3) d'alimentation en agents de fonctionnement est reliée à la première plaque (4a) partielle et comprend une plaque (9) de raccordement, qui a les raccords (13) d'agents de fonctionnement, de préférence également les bornes (10) de courant.

8. Module (1) de pile à combustible suivant l'une des revendications 5 à 7, **caractérisé en ce qu'**un empilement (6) de piles (6') d'humidification est monté entre la deuxième plaque (4b) partielle et la plaque (7) d'extrémité, dans lequel la deuxième plaque (4b) partielle et la plaque (7) d'extrémité sont bloquées entre elles, de manière à maintenir ensemble en même temps, tant l'empilement (5) de piles (5') à combustible qu'également l'empilement (6) de piles (6') d'humidification.

9. Module (1) de pile à combustible suivant l'une des revendications 5 à 8, **caractérisé en ce que** des canaux (34) d'agents de fonctionnement traversent les deux plaques (4a, 4b) partielles.

10. Système (100) de piles à combustible comprenant plusieurs modules (1) de pile à combustible, chacun suivant l'une des revendications précédentes qui, pour l'alimentation en agents de fonctionnent, sont raccordés à une alimentation (20, 21) commune en agents de fonctionnement.

11. Procédé pour faire fonctionner un système (100) de pile à combustible ayant plusieurs modules (1) de pile à combustible, chacun suivant l'une des revendications 1 à 9, que l'on alimente en agents de fonctionnement, à partir d'une alimentation (20, 21) commune en agents de fonctionnement, dans lequel, pour le remplacement d'une unité (2) de pile à combustible d'un module (1) de pile à combustible en fonctionnement courant du système (100) de pile à combustible, on met l'unité (2) de pile à combustible de ce module (1) de pile à combustible dans un état sécurisé, au moyen de la procédure de mise hors circuit et ensuite, on la sépare de l'unité (3) d'alimentation en agents de fonctionnement, dans lequel, après une séparation de l'unité (2) de pile à combustible de l'unité (3) d'alimentation en agents de fonctionnement, l'unité (3) d'alimentation en agents de fonctionnement reste raccordée au système (100) de pile à combustible.

12. Procédé suivant la revendication 11, **caractérisé en ce que** la procédure de mise hors circuit comprend une décharge et une inertisation des piles (5') à combustible.

13. Procédé pour faire fonctionner un système (100) de pile à combustible ayant plusieurs modules (1) de pile à combustible, chacun suivant l'une des revendications 1 à 9, que l'on alimente en agents de fonctionnement, à partir d'une alimentation (20, 21) commune en agents de fonctionnement, dans lequel, lors d'un fonctionnement en cours du système (100) de pile à combustible et alors que l'unité (3) d'alimentation en agents de fonctionnement est raccordée au système (100) de pile à combustible, on relie l'unité (2) de pile à combustible à l'unité (3) d'alimentation en agents de fonctionnement et on la met en fonctionnement au moyen de la procédure de mise en circuit.

14. Procédé suivant la revendication 13, **caractérisé en ce que** la procédure de mise en circuit, comprend au moins l'un, de préférence tous les stades suivants :
- contrôle d'un raccordement conforme aux prescriptions de capteurs et d'actionneurs au dispositif (30) de commande et/ou de régulation de module,
- contrôle d'un raccordement conforme aux prescriptions de conducteurs (52) de courant pour la conduction d'un courant produit par l'unité (2) de pile à combustible,
- remplissage par du réfrigérant d'espaces pour réfrigérant de l'unité (2) de pile à combustible,
- remplissage par un gaz inerte d'espaces pour gaz de fonctionnement de l'unité (2) de pile à combustible,
- contrôle d'étanchéité,
- remplissage par des gaz de fonctionnement d'espaces pour gaz de fonctionnement de l'unité (2) de pile à combustible,
- contrôle de la réaction électrochimique des piles (5') à combustible, de préférence à l'aide de tensions en marche à vide.

15. Procédé suivant l'une des revendications 11 à 14, dans lequel, pour le remplacement d'une unité (2) de pile à combustible d'un module (1) de pile à combustible, on effectue d'abord le procédé suivant l'une des revendications 11 et 12, et ensuite le procédé suivant l'une des revendications 13 et 14.
